# EUROPÄISCHE PATENTANMELDUNG

(11) **EP 3 072 422 A1**
(43) Veröffentlichungstag der Anmeldung: **28.09.2016**
(21) Anmeldenummer: 15160297.6
(22) Anmeldetag: 23.03.2015
(51) Int. Cl.: A47J 19/06

(54) **VORRICHTUNG ZUM ZERKLEINERN VON GEMÜSE ODER FRÜCHTEN, INSBESONDERE KNOBLAUCH- ODER KARTOFFELPRESSE**

(71) Anmelder: Gerig Design AG, 9000 St. Gallen (CH)
(72) Erfinder: Gerig, Thomas, 9515 Hosenruck (CH)
(74) Vertreter: Hepp Wenger Ryffel AG

(57) **Zusammenfassung**

Es wird eine Vorrichtung (1) zum Zerkleinern von Gemüse oder Früchten, insbesondere Knoblauch- oder Kartoffelpresse gezeigt, die zumindest eine Führung (2) zum Führen eines Stempels (3) und einen Stempel (3) umfasst. Die Führung (2) umfasst eine Einführseite (4) und eine Pressseite (5) und eine von einer geraden abweichenden Form, insbesondere eine gebogene Form, bevorzugt ein Radius. Der Stempel (3) umfasst einen vorderen Stempelbereich (6), der eine Form aufweist, die etwa der Form der Führung (2) entspricht, insbesondere der gebogenen Form, bevorzugt etwa dem Radius der Führung (2). Der vordere Stempelbereich (6) ist somit in der Führung führbar. Der Stempel (3) ist in der Führung (2) um einen virtuellen Drehpunkt (7) drehbar ausgebildet.

## Beschreibung

Die Erfindung richtet sich auf eine Vorrichtung zum Zerkleinern von Gemüse oder Früchten, insbesondere eine Knoblauch- oder Kartoffelpresse.

Vorrichtungen zum Zerkleinern von Gemüse oder Früchten sind aus dem Stand der Technik hinreichend bekannt.

Aus der US 5,370,044 ist beispielsweise eine Knoblauchpresse bekannt, bei der ein Stempel den Knoblauch durch ein Sieb presst. Die Presskraft wird durch einen Hebel aufgebracht, der mit dem Stempel um eine mechanische Drehachse drehbar ausgebildet ist. Nachteilig an dieser Knoblauchpresse ist die schlechte Reinigbarkeit sowie ein nicht optimales Kräfteverhältnis.

Die WO 2009/080205 zeigt eine Lebensmittelpresse, bei der ein Stempel senkrecht in eine Form gepresst wird und das Pressgut seitlich am Stempel in einen Sammelraum vorbeigepresst wird. Nachteilig an dieser Ausführungsform ist, dass keinerlei Hebelwirkung vorhanden ist und somit die erforderliche Kraft zum Zerkleinern der Lebensmittel kaum aufgebracht werden kann.

Es ist daher Aufgabe der vorliegenden Erfindung die Nachteile des Standes der Technik zu vermeiden und insbesondere eine Vorrichtung zum Zerkleinern von Gemüse oder Früchten zu schaffen, die leicht zu reinigen ist und ein optimales Kraftverhältnis aufweist.

Die Aufgabe wird durch eine Vorrichtung zum Zerkleinern von Gemüse oder Früchten, insbesondere Knoblauch- oder Kartoffelpresse, gelöst, die zumindest eine Führung zum Führen eines Stempels und einen Stempel umfasst. Die Führung umfasst eine Einführseite und eine Pressseite und eine von einer graden abweichende Form. Die Form ist insbesondere eine gebogene Form, bevorzugt weist die Führung einen Radius auf. Der Stempel umfasst einen vorderen Stempelbereich, der eine Form aufweist, die etwa der Form der Führung entspricht, insbesondere der gebogenen Form, bevorzugt etwa dem Radius der Führung entspricht, so dass der vordere Stempelbereich in der Führung führbar ist. Der Stempel ist in der Führung um eine virtuelle Drehachse drehbar ausgebildet.

Eine derartige Vorrichtung ist leicht zu reinigen, kann leicht auseinander genommen werden und ermöglicht eine grosse Kraft auf das Gemüse oder die Früchte sodass diese leicht zu zerkleinern sind.

Gemäss der Erfindung bedeutet eine virtuelle Drehachse, dass die Achse nicht materiell ausgebildet ist, sondern ein virtueller Drehpunkt bevorzugt ausserhalb der Vorrichtung besteht. Hierbei kann die Form von Stempel und Führung auch leicht voneinander abweichen, da diese Abweichungen durch ein Spiel zwischen Führung und Stempel leicht auszugleichen sind.

Bevorzugt ist zwischen Führung und Stempel ein Spiel ausgebildet, so dass der Stempel in der Führung bewegbar ist ohne zu verkannten.

Der Stempel kann ein Stempelhebelelement umfassen, sodass die Kraft im vorderen Stempelbereich leicht aufgebracht werden kann.

Ein Querschnitt von Führung und Stempel kann vieleckig, quadratisch, dreieckig, rund oder oval sein.

Somit lässt sich der Querschnitt von Führung und Stempel auf das bevorzugt zu pressende Gemüse oder die bevorzugt zu pressenden Früchte anpassen, sodass das Gemüse oder die Früchte genauso in der Vorrichtung zu liegen kommen, wie sie optimal gepresst werden.

Die Pressseite der Führung kann im Längsschnitt rund, flach oder dreieckig ausgebildet sein. Bevorzugt ist weiterhin der vordere Stempelbereich etwa passgenau zur Pressseite der Führung ausgebildet.

Ausserdem könnte die Pressseite bzw. der vordere Stempelbereich im Längsschnitt auch konkav ausgebildet sein.

Somit lässt sich auch die Pressseite an die Erfordernisse jeweils des spezifischen Gemüses oder der Früchte anpassen.

Insbesondere spielt die Ausbildung der Pressseite mit der Anzahl der Öffnungen zusammen, da beispielsweise bei sehr weichem Gemüse und nur einer Öffnung, eine runde oder dreieckige Form zu bevorzugen ist, um möglichst das Ganze Pressgut aus der Vorrichtung auspressen zu können.

Die Führung kann ein Standfuss umfassen, sodass die Vorrichtung bei Benutzung auf einer Oberfläche aufstellbar ist.

Somit kann die Vorrichtung auf einer Oberfläche hingestellt werden und die Kraft mit nur einer Hand von oben auf das Stempelhebelelement aufgebracht werden. Somit ist eine grössere Kraft möglich, als nur durch Zusammenpressen einer Hand an sich aufgebracht werden kann.

Die Führung kann in einem Führungshebelelement angeordnet sein.

Eine derartige Ausführungsform ermöglicht die Benutzung allein durch Handkraft in einer Hand, indem Führungshebelelement und Stempelhebelelement zusammengedrückt werden. Dies erlaubt eine ortsunabhängige Verwendung der Vorrichtung.

Die Pressseite der Führung kann mindestens eine, bevorzugt genau eine, Öffnung umfassen, durch die Pressgut hindurchpressbar ist.

Es hat sich gezeigt, dass eine Öffnung ausreichend ist, um beispielsweise Knoblauch mit einer derartigen Presse zu pressen. Weiterhin wird durch die Anordnung von nur einer Öffnung die Fliessgeschwindigkeit innerhalb der einen Öffnung erhöht und somit mehr Material durch die Öffnung mitgerissen. Dies führt zu einer leichteren Reinigbarkeit.

Die Öffnung oder die Öffnungen können eine Kreuzform oder Sternform haben.

Bevorzugt haben die kreuzförmigen oder sternförmigen Öffnungen abgerundete äussere Enden. Es hat sich gezeigt, dass insbesondere für Knoblauch, eine Kreuz- oder Sternform vorteilhaft ist, da die einzelnen Zellwände an den inneren Ecken dieser Öffnungen aufreissen und somit leichter und besser gepresst werden.

Der vordere Stempelbereich kann mindestens, bevorzugt genau eine, Erhebung umfassen, die an die Form der Öffnung oder der Öffnungen angepasst ist und in einem geschlossenen Zustand der Vorrichtung in die Öffnungen eingreift.

Somit wird das Pressgut auch aus der Öffnung herausgepresst und die Vorrichtung ist sehr leicht zu reinigen.

Der vordere Stempelbereich kann eine Vertiefung umfassen, sodass Pressgut in der Vertiefung sammelbar ist. Insbesondere ist die Vertiefung auf der Stempelseite, die zum virtuellen Drehpunkt hin angeordnet ist, angeordnet.

In einer derartigen Ausführungsform ist keine Öffnung an der Pressseite der Führung vorhanden oder nötig, sondern das Pressgut wird in Richtung Stempel in die Vertiefung zurückgedrückt. Dies hat den Vorteil, dass beim Herausnehmen des Stempels das Pressgut direkt auf dem Stempel gesammelt ist und mit dem Stempel zur weiteren Verwendung getragen werden kann.

Die Pressseite kann im Längsschnitt zumindest teilweise, insbesondere im Bereich der Öffnung oder der Öffnungen, eine Dicke von 0,4 mm bis 1.0 mm, bevorzugt 0.5mm-0.8 mm aufweisen.

Eine Dicke im Bereich von 0,4 mm bis 1.0mm hat bei Versuchen das optimale Verhältnis zwischen Festigkeit und Reinigbarkeit ergeben.

Das Stempelhebelelement kann im Endbereich im Querschnitt teilrund oder rund ausgebildet sein und die Rundung kann einen Radius von 9 mm aufweisen.

Eine runde oder teilrunde Ausbildung des Stempelhebelelements ist angenehm zu greifen und führt zu keinen Schmerzen bei Aufbringen von Kraft. Ein Radius von 9 mm ist erfahrungsgemäss angenehm in der Handhabbarkeit.

Die Führung kann einen Durchmesser im Querschnitt von mindestens 15 mm und maximal 30 mm, bevorzugt mindestens 18 mm und maximal 25 mm, insbesondere bevorzugt 22 mm aufweisen.

Ein derartiger Durchmesser ist optimal für die Verarbeitung von Knoblauchzehen geeignet.

Der Durchmesser im Rahmen dieser Erfindung bezeichnet den grössten Querschnitt durch die Führung.

Die Vorrichtung kann frei von einer mechanischen Achse zwischen Stempel und Führung ausgebildet sein.

Somit lässt sich der Stempel leicht von der Führung trennen und ist weiterhin kostengünstig herstellbar.

Die Erfindung wird im Folgenden anhand von Ausführungsbeispielen mithilfe von Figuren erläutert. Hierbei zeigt:
- Figur 1: einen schematischen Querschnitt durch verschiedene Varianten einer Pressseite,
- Figur 2: eine schematische Ansicht einer erfindungsgemässen Vorrichtung,
- Figur 3: einen Querschnitt durch alternative Ausführungsformen einer Pressseite,
- Figur 4: eine schematische Darstellung einer alternativen Ausführungsform der Vorrichtung,
- Figur 5: eine schematische Darstellung einer alternativen Ausführungsform der Vorrichtung,
- Figur 6: eine schematische Darstellung einer weiteren alternativen Ausführungsform der Vorrichtung,
- Figur 7: eine schematische Darstellung einer alternativen Ausführungsform der Vorrichtung,
- Figur 8: eine weitere schematische Darstellung einer alternativen Ausführungsform,
- Figur 9: eine schematische Darstellung einer alternativen Ausführungsform eines Stempels.

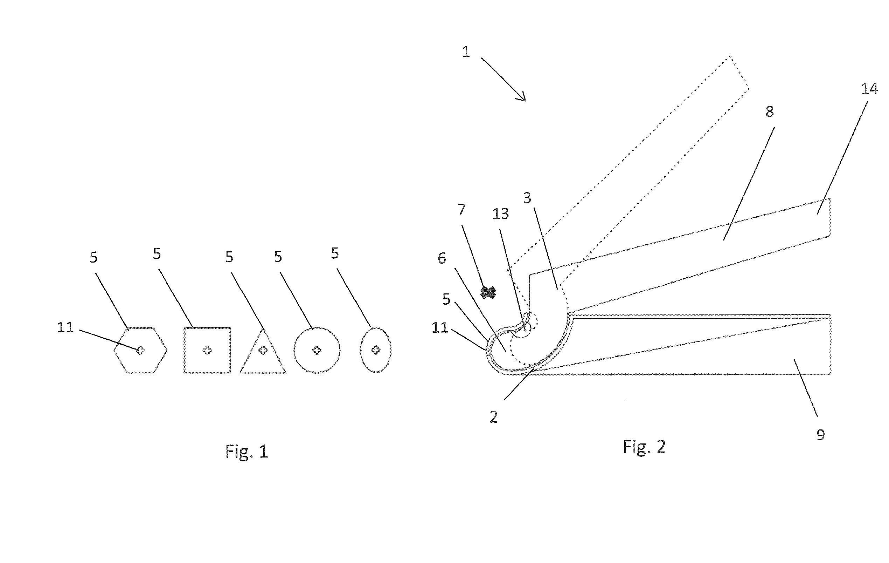

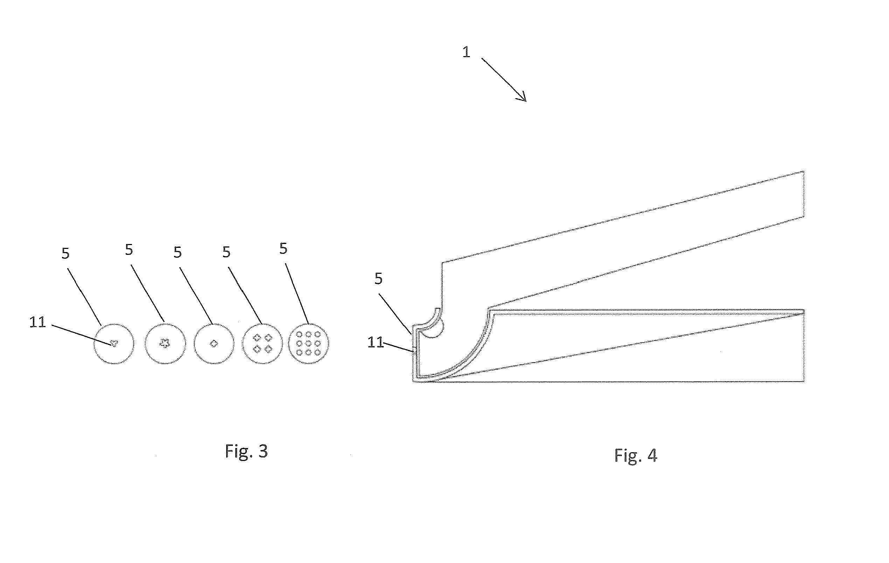

Die Figuren 1 und 2 zeigen eine erfindungsgemässe Vorrichtung zum Zerkleinern von Gemüsen oder Früchten, wobei Figur 1 verschiedene Varianten einer Pressseite 5 der Vorrichtung 1 zeigt. Die Vorrichtung 1 weist eine Führung 2 und einen darin geführten Stempel 3 auf. Der Stempel 3 umfasst einen vorderen Stempelbereich 6, der der gebogenen Form der Führung 2 entspricht. Der Stempel 3 ist in der Führung 2 führbar, wobei zwischen dem Stempel 3 und der Führung 2 ein Spiel gelassen wird, sodass sich der Stempel 3 nicht verkantet. Der Stempel 3 wird von einer offenen Position (gestrichelt dargestellt) nach Einlegen beispielsweise einer Knoblauchzehe, in eine geschlossene Position geführt. Hierbei wird der Stempel 3 um den virtuellen Drehpunkt 7 bewegt. Der Stempel 3 berührt mit dem vorderen Stempelbereich 6 in der geschlossenen Position die Pressseite 5 und presst so das eingelegte Pressgut durch die Öffnung 11, die kreuzförmig ausgebildet ist. Das Kreuz hat hierbei abgerundete äussere Ecken. Im Längsschnitt ist der vordere Stempelbereich im Wesentlichen rund ausgebildet, sodass auch die Führung eine Runde vordere Form an der Pressseite 5 aufweist. Im Querschnitt können Stempel 3 und Führung 2 sämtliche Formen annehmen, die in Figur 1 dargestellt sind. In dieser Ausführungsform ist immer nur eine Öffnung 11 vorgesehen. Denkbar ist weiterhin jede Ausführungsform aus Figur 3.

Der Stempel 3 umfasst weiterhin ein Stempelhebelelement 8 welches eine Hebelkraft ermöglicht. Das Stempelhebelelement 8 weist einen Endbereich 14 auf, der im Querschnitt rund ausgebildet ist, sodass er angenehm zu greifen ist. Die Führung 2 weist einen Standfuss 9 auf, sodass manuell ausschliesslich das Stempelhebelelement 8 bewegt werden muss, während der Standfuss 9 auf einer Oberfläche aufliegt. Der Stempel 3 hat weiterhin eine Vertiefung 13, die Pressgut, welches nicht durch die Öffnung 11 ausgepresst wird, aufnehmen kann. Es ist weiterhin möglich die Vertiefung 13 anstatt der Öffnung 11 zu verwenden.

Figur 3 zeigt eine runde Ausführungsform der Pressseite 5 mit alternativen Varianten der Öffnung 11. Die Öffnung 11 kann dreiflügelig, sternförmig, kreuzförmig oder rund ausgebildet sein, es können weiterhin eine, vier oder neun Öffnungen ausgebildet sein. Diese Ausführungsformen können mit den Ausführungsformen aus Figuren 4 bis 8 kombiniert werden.

Figur 4 zeigt eine alternative Ausführungsform der Vorrichtung 1 aus der Figur 2. Im Unterschied zur Ausführungsform aus Figur 2 ist der vordere Stempelbereich 6 und die dazugehörige Pressseite 5 flach ausgebildet. Diese Ausführungsform ist besonders vorteilhaft durch die Wirbelbildung beim Reinigen innerhalb der Führung 2, die zu einer sehr leichten Reinigbarkeit führt.

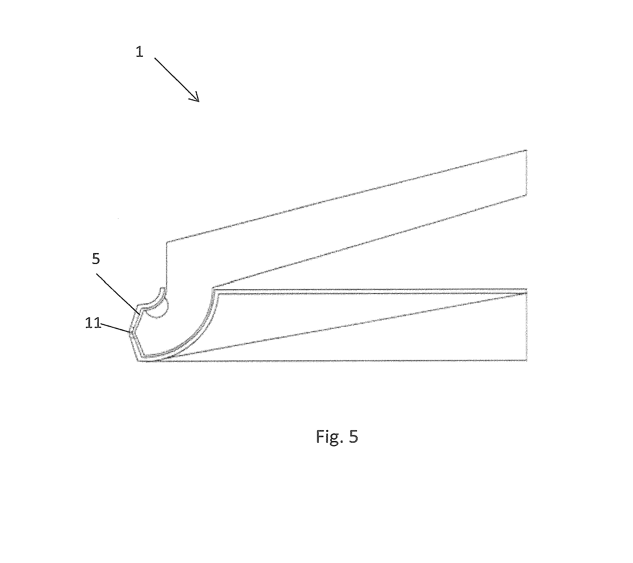

Figur 5 zeigt eine weitere Ausführungsform als Alternative zur Figur 2. In dieser Ausführungsform ist der vordere Stempelbereich 6 und passend dazu die Pressseite 5 im Längsschnitt dreieckig ausgeführt, sodass das Pressgut Richtung 11 geleitet wird

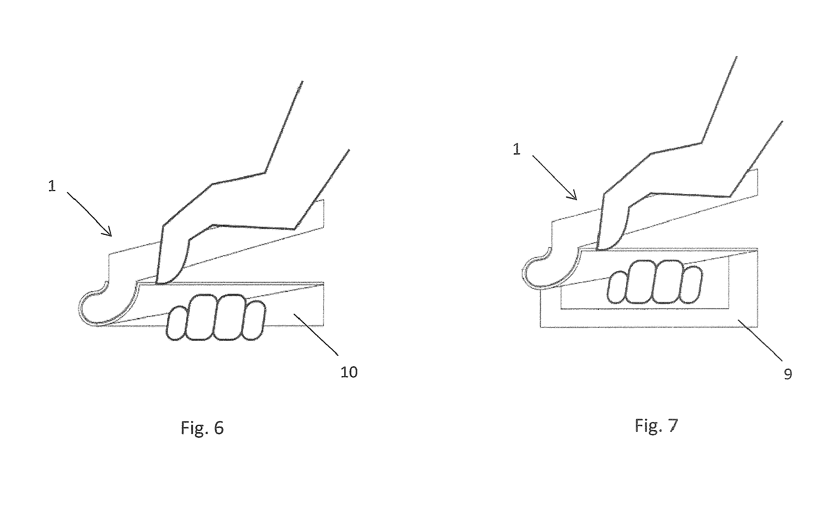

Figur 6 zeigt ein Handmodell der Vorrichtung 1, bei der ein Führungshebelelement 10 ausgebildet ist.

Figur 7 zeigt eine Standvariante der Vorrichtung 1, bei der anstatt des Führungshebelelementes 10 aus Figur 6 ein Standfuss 9 ausgebildet ist. Hierbei kann auch die Kraft durch Auflehnen auf das Stempelhebelelement 8 zum Pressen verwendet werden.

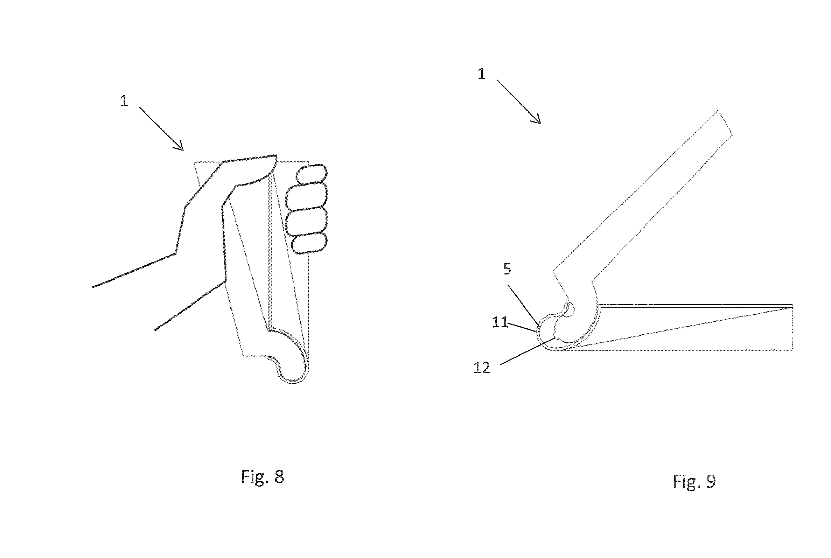

Figur 8 zeigt eine alternative Haltung der Vorrichtung 1 zum Pressen, die besonders dazu geeignet ist das Pressgut direkt aus der Vorrichtung 1 in ein weiteres Gefäss einzugeben, da die Öffnung 11 direkt nach unten geführt ist.

Figur 9 zeigt zeigt eine alternative Ausführungsform der Vorrichtung 1 aus der Figur 2. Abweichend von der in Figur 2 gezeigten Ausführungsform umfasst die Vorrichtung 1 hier einer Erhebung 12, die in die Öffnung 11 in der Presseite 5 im geschlossenen Zustand der Vorrichtung eingreift. Somit wird die Öffnung direkt nach dem Pressvorgang gereinigt.

## Patentansprüche

1. Vorrichtung (1) zum Zerkleinern von Gemüse oder Früchten, insbesondere Knoblauch- oder Kartoffelpresse, umfassend zumindest eine Führung (2) zum Führen eines Stempels (3) und einen Stempel (3), wobei die Führung (2) eine Einführseite (4) und eine Pressseite (5) umfasst und eine von einer Geraden abweichende Form, insbesondere eine gebogene Form, bevorzugt einen Radius, aufweist und der Stempel (3) einen vorderen Stempelbereich (6) umfasst, der eine Form aufweist, die etwa der Form der Führung (2) entspricht, insbesondere der gebogenen Form, bevorzugt etwa dem Radius der Führung (2) entspricht, so dass der vordere Stempelbereich (6) in der Führung führbar ist, **dadurch gekennzeichnet, dass** der Stempel (3) in der Führung (2) um einen virtuellen Drehpunkt(7) drehbar ausgebildet ist.

2. Vorrichtung nach Anspruch 1, **dadurch gekennzeichnet, dass** der Stempel ein Stempelhebelelement (8) umfasst.

3. Vorrichtung nach einem der vorhergehenden Ansprüche, **dadurch gekennzeichnet, dass** ein Querschnitt von Führung und Stempel, vieleckig, quadratisch, dreieckig, rund oder oval ist.

4. Vorrichtung nach einem der vorhergehenden Ansprüche, **dadurch gekennzeichnet, dass** die Pressseite (5) im Längsschnitt rund, flach oder dreieckig ausgebildet ist, wobei bevorzugt der vordere Stempelbereich (6) etwa passgenau zur Pressseite (5) der Führung ausgebildet ist.

5. Vorrichtung nach einem der vorhergehenden Ansprüche, **dadurch gekennzeichnet, dass** die Führung (2) einem Standfuss (9) umfasst, so dass die Vorrichtung bei Benutzung auf einer Oberfläche aufstellbar ist.

6. Vorrichtung nach einem der Ansprüche 1 bis 4, **dadurch gekennzeichnet, dass** die Führung (2) in einem Führungshebelelement (10) angeordnet ist.

7. Vorrichtung nach einem der vorhergehenden Ansprüche, **dadurch gekennzeichnet, dass** die Pressseite (5) der Führung (2) mindestens eine, bevorzugt genau eine, Öffnung (11) umfasst, durch die Pressgut hindurchpressbar ist.

8. Vorrichtung nach Anspruch 7, **dadurch gekennzeichnet, dass** die Öffnung (11) oder die Öffnungen eine Kreuzform oder Sternform haben.

9. Vorrichtung (1) nach einem der Ansprüche 7 oder 8, **dadurch gekennzeichnet, dass** der vordere Stempelbereich (6) mindestens eine, bevorzugt genau eine, Erhebung (12) umfasst, die an die Form der Öffnung (11) oder der Öffnungen angepasst ist und in einem geschlossenen Zustand der Vorrichtung (1) in die Öffnung (11) oder Öffnungen eingreift.

10. Vorrichtung (1) nach einem der Ansprüche 1 bis 6, **dadurch gekennzeichnet, dass** der vordere Stempelbereich (6) eine Vertiefung (13) umfasst, so dass Pressgut in der Vertiefung (13) sammelbar ist, insbesondere eine Vertiefung (13) auf der Stempelseite, die zum virtuellen Drehpunkt (7) hin angeordnet ist.

11. Vorrichtung (1) nach einem der vorhergehenden Ansprüche, **dadurch gekennzeichnet, dass** die Pressseite (5) im Längsschnitt zumindest teilweise, insbesondere im Bereich der Öffnung (11) oder der Öffnungen, eine Dicke von 0.4mm bis 1.0 mm aufweist.

12. Vorrichtung (1) nach einem der vorhergehenden Ansprüche, **dadurch gekennzeichnet, dass** das Stempelhebelelement (8) im Endbereich (14) im Querschnitt teilrund oder rund ausgebildet ist und die Rundung einen Radius von im Wesentlichen 9mm aufweist.

13. Vorrichtung (1) nach einem der vorhergehenden Ansprüche, **dadurch gekennzeichnet, dass** die Führung (2) einen Durchmesser im Querschnitt von min. 15mm und max. 30mm, bevorzugt min. 18mm und max. 25 mm, insbesondere bevorzugt 22 mm aufweist.

14. Vorrichtung (1) nach einem der vorhergehenden Ansprüche, **dadurch gekennzeichnet, dass** das die Vorrichtung (1) frei von einer mechanischen Achse zwischen Stempel (3) und Führung (2) ausgebildet ist.
